## Europäisches Patentamt
## European Patent Office
## Office européen des brevets

(11) Publication number: **0 085 210**
**A1**

(12) **EUROPEAN PATENT APPLICATION**

(21) Application number: **82300485.8**

(22) Date of filing: **29.01.82**

(51) Int. Cl.³: **G 06 F 15/20**
**G 06 F 13/00**

(43) Date of publication of application:
**10.08.83 Bulletin 83/32**

(84) Designated Contracting States:
**DE FR GB**

(71) Applicant: **International Business Machines Corporation**
**Old Orchard Road**
**Armonk, N.Y. 10504(US)**

(84) Designated Contracting States:
**DE FR**

(71) Applicant: **IBM United Kingdom Limited**
**P.O. Box 41 North Harbour**
**Portsmouth Hampshire PO6 3AU(GB)**

(84) Designated Contracting States:
**GB**

(72) Inventor: **Miessler, Milan Herman**
**"Bracken Cottage" Ampfield**
**Romsey Hants(GB)**

(74) Representative: **Richards, John Peter**
**IBM UNITED KINGDOM PATENT OPERATIONS Hursley Park**
**Winchester Hants, SO21 2JN(GB)**

(54) Image processing system.

(57) An image processing system comprises: a word organised random access memory for storing a digital input image having X rows by Y columns of image points, the memory comprising N memory blocks each having XY/N image point storage locations; storage means for storing the digital input image in the memory in such manner that for consecutive rows of the input image the first image point in each row $i$ ($0 \leqslant i \leqslant X-1$) is stored in a memory block $n_i$ ($0 \leqslant n_i \leqslant N-1$) according to the following cyclic code: $n_{i+1} = [n_i + k]_{mod\ N}$ where: $n_i$ is the memory block assigned to the first image point in row $i$, $k$ is an integer $0 < k < N$, and $n_0$ (corresponding to row i=0) may be 0 or any arbitrary integer $\leqslant N-1$, the subsequent image points in each row $i$ of the input image being stored cyclically in the memory blocks on the basis of a common cycle which has a period N; and retrieval means for retrieving in parallel from any position of the stored input image a kernel of image points of at least one fixed shape whose image points are contained in different memory blocks, the retrieval means comprising means responsive to the address in the input image of one reference image point of the kernel for providing the address of the reference image point in its assigned memory block, and means for modifying where necessary the last mentioned address for supply to those memory blocks containing image points of the kernel other than the reference image point.

./...

FIG. I

IMAGE PROCESSING SYSTEM

This invention relates to a digital image processing system including a word organised random access memory.

A digital image is considered to be a two-dimensional array of image points, each of which comprises an integer or a set of integers. Image processing requires the capability of storing an image array in a memory and retrieving selected clusters of points simultaneously, such as sequences of points in a single row or column of the array and points within a small rectangular area. Such clusters of image points are hereinafter referred to as "kernels". This imposes the constraint that the memory must allow all points in any selected kernel to be accessed in one memory cycle. A conventional word organized memory includes a plurality of randomly accessible "words" of storage locations, each word of which can store a kernel of image points. However, it is necessary to modify the accessing mechanism of this conventional memory in order to permit access to kernels of image points when the points are not all in the same word of storage.

U.K. Patent Specification 1,505,914 (SA9-74-022) describes an image processing system which stores a digital input image in a word organised random access memory having 2N memory divisions (memory blocks) while permitting kernels having only N image points to be obtained. Specifically, the available kernels are a 1 x pq horizontal strip, a pq x 1 vertical strip, or a p x q rectangle, where pq = N.

The disadvantages of this system are:

1) The division of the word organised memory into 2N memory blocks requires complex address modification during both storage and retrieval of image points.

2)    The number of image points accessible in a rectangular kernel is precisely N;  in other words if N = 16 one cannot obtain a 3 x 5 or 5 x 3 kernel which are particularly useful kernel shapes for some kinds of image enhancement techniques.

It is therefore an object of the present invention to provide a digital image processing system which mitigates these disadvantages.

This is achieved by the combination of features claimed in claim 1.

The advantages of the invention are that the word organised memory has only N divisions (memory blocks), thereby permitting considerably simpler address modification.  Nevertheless, despite the restriction to N memory blocks, by a suitable choice of k one can obtain any desired 1 x N horizontal kernel, any N x 1 vertical kernel, or any rectangle of N or close to N image points (when N is even) or N-1 or close to N-1 image points (when N is odd) from any arbitrary position in the input image.  In particular, one can obtain a rectangular kernel containing N-1 image points irrespective of whether N is even or odd, which is not possible with the prior art system.

The integer k may be fixed for the system, in which case it will be appropriately chosen for obtaining the kernel shapes desired in a particular application, and it is to be noted that for any permissible value of k at least one rectangular kernel having N or close to N image points can be obtained from any part of the input image in addition to any 1 x N horizontal kernel which is always obtainable.  In many cases, however, where N and k are relatively prime, one can always access any 1 x N horizontal kernel, any N x 1 vertical kernel, and any rectangular kernel of at least one fixed shape having N-1 or slightly less image points.

On the other hand, $k$ may be variable for the system, in which case greater flexibility is achieved and in fact any N element vertical or horizontal strip-form kernel, or any rectangular kernel having N or N-1 image points can be obtained by an appropriate choice of $k$ during storage of the input image in the memory blocks. This variation of $k$ may be achieved by using look-up-tables for memory block assignment and address modification, the contents of the look-up-tables being variable by programming or plug-in replacement of the tables.

Naturally the system may provide kernels of less size than the maximum possible for any given value of $k$, either by ignoring or suppressing the unwanted image points which are output from the system or by inhibiting the access to the modules containing the unwanted image points.

An embodiment of the invention will now be described, by way of example, with reference to the accompanying drawings, in which:

Figures 1 and 2 are tables illustrating for $k = 9$ and $k = 5$ respectively the assignment of image points to memory blocks in a system according to the invention having sixteen memory blocks,

Figure 3 is a table illustrating for $k = 5$ the addresses of the input image points in their assigned memory blocks,

Figure 4 is a block diagram of that part of a system according to an embodiment of the invention which is used for the initial storage of a digital input image,

Figure 5 is a block diagram of that part of the same system which is used for kernel retrieval,

- 4 -

Figures 6 and 7 schematically illustrate the contents of the look-up-table $L_R(\emptyset)$ of figure 5 for $\underline{k} = 5$ and two different kernel shapes respectively, and

Figures 8 and 9 schematically illustrate the contents of the look-up-table $L_C(\emptyset)$ of figure 5 for $\underline{k} = 5$ and two different kernel shapes respectively.

In the system to be described we assume a digital input image of maximum size X rows by Y columns of image points or pixels, typically 1024 x 1024 image points. Each image point is a binary number, typically 16 bits long, representing the intensity and/or colour of a respective point in an original image, such as one spot on a CRT. At the outset it should be understood that the terms "row" and "column" are used as a convenience (as is conventional in the art) to distinguish between the two usually orthogonal directions associated with an array of image points or the array of storage locations in a solid state storage device, and are generally interchangeable except where prohibited by the context.

The input image is stored in N memory blocks ($\emptyset,1,2...N-1$) each comprising at least Y/N columns and X rows. Each memory block thus provides at least XY/N individually addressable locations each for the storage of a single image point. The memory blocks are arranged as a word organised random access memory system wherein all the memory blocks are accessible in parallel for simultaneous read-out from a single storage location of each. In the case where N=16 and assuming a 1024 x 1024 image, each memory block provides 64 columns by 1024 rows, i.e. it is a 64K pixel memory block.

Since each image point is assumed to consist of 16 bits, for practical reasons each memory block consists of a plurality of individual storage modules which are accessed in parallel when the memory block as a whole is addressed. In the present case each individual storage location of a memory block in fact consists of 16 separate bit storage positions located one on each of 16 storage modules constituting that memory block, so that each 64K pixel memory block actually comprises sixteen 64K bit storage modules. However, it is not strictly necessary for each memory block to contain the same number of storage modules as the number of bits in each image point, since storage modules are available which can store more than one bit at each addressable storage location, for example 4 bits. In such a case and assuming a 16 bit image point, only four such modules would be required per memory block. The grouping of individual modules into blocks in this way is well known in the art and in the following description we will use the term "memory block" on the understanding that in general it may include a number of modules accessed in parallel to store or retrieve an image point, although in the elementary case where each image point consists of only a single bit ($\emptyset$ or 1), or where the number of bits capable of storage at each location of a module is equal to the number of bits defining each image point, each memory block would consist of only one module.

The storage of the input data (image points) in the memory blocks is effected in such manner that for spatially consecutive rows of the input image the first image point in each row $i$ ($\emptyset \leq i \leq X-1$) is assigned for storage in a memory block $n_i$ ($\emptyset \leq n_i \leq N-1$) according to the following cyclic code:

$$n_{i+1} = [n_i + k]_{mod\ N}$$

where: $n_i$ is the memory block assigned to the first image point in row $i$,

$k$ is an integer $\emptyset < k < N$, and

$n_\emptyset$ (corresponding to row $i=\emptyset$) may be any arbitrary integer $\leq N-1$, but is conveniently zero.

- 6 -

The first image point in each row $\underline{i}$ of the input image is stored in the same relative column $\underline{c}$ of its assigned memory block as the first image point of every other row, for simplicity the first column $(c=\emptyset)$, and in a row $\underline{r}$ which for simplicity is the same as $(r=i)$, but may be displaced by a common number of rows $\underline{z}$ from $(r=i+z)$, the row of the digital input image from which it was derived.

Once the starting memory block has been established for the first image point of each row, the subsequent image points in each row $\underline{i}$ are assigned in succession cyclically to the N memory blocks each for storage in the same row $\underline{r}$ of its assigned memory block as the first image point in the starting memory block, the row assignment cycle having a period N and being common to all the rows of the input image with only the starting memory block being different according to the above code.

Thus the $\underline{jth}$ image point in each row of the digital input image $(\emptyset \leq j \leq Y-1)$ is stored at the same column location in its assigned memory block as the $\underline{jth}$ image point of all the other rows - in other words the $\underline{jth}$ image point in the $\underline{ith}$ row of the input image is stored at column location $[(j/N) + c]$ in the $(i+z)\underline{th}$ row of its assigned memory block, where "/" indicates the quotient of integer division (i.e. ignoring remainder), $\underline{c}$ is the starting column, and $\underline{z}$ is the above-mentioned fixed but arbitrary row displacement. Both $\underline{c}$ and $\underline{z}$ will be assumed to be zero in the following discussion. It is to be understood however that where the first image point in each row of the input image is not stored in the first column of the assigned memory block $(c\neq\emptyset)$, or when the displacement $\underline{z}$ is not zero, for the maximum image size X x Y and the minimum memory block size XY/N the storage of image points in the horizontal and/or vertical directions will need to be wrapped around to the first row and column of the memory blocks at some stage in the storage of the input image.

Given this storage strategy, for any given values of N and $\underline{k}$ one can in principle obtain, from any position in the input image, parallel access to kernels having a maximum size as follows:

1)    Any horizontal 1 x N kernel,

2)    Any vertical P x 1 kernel where P is the cycle period
      of the block assignment code for the first image point
      of each row, and

3)    Any rectangular kernel having $\underline{p}$ rows and $\underline{q}$ columns
      where:

      $\underline{q} \leq$ the lesser of k and (N-k), and

      $\underline{p}$ is the minimum value satisfying

      $$1 \leq (j + pk)_{mod\ N} \leq q$$

      for any integer value of $\underline{j}$ from 1 to $\underline{q}$.

This is because, for any such kernel, all the image points are
stored in a different memory block of the system.  Naturally kernels
of less than this maximum size can be obtained either by inhibiting
the access to selected memory blocks or ignoring or suppressing their
output.

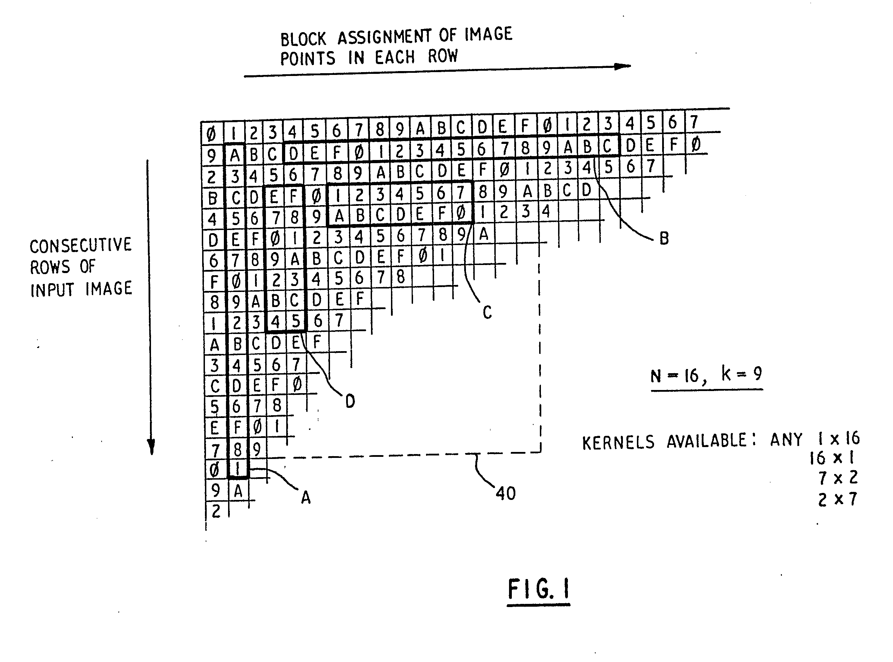

As an example, figure 1 shows in hexadecimal notation the memory
block assignment (mapping) of input image points for N=16 ($\emptyset$,1,2.....E,F)
and $\underline{k}$=9.  Each horizontal row of boxes in the figure represents a
respective row of image points of the digital input image, consecutive
boxes in each row corresponding to consecutive image points in the
original image.  The number in each box ($\emptyset$ to F hexadecimal) identifies
that memory block in which the respective image point is stored.  For
example, the 10th image point in the 3rd row of the input image is
stored in memory block B (the 11th) and the 4th image point in the 8th
row is stored in memory block 2.

According to the previously mentioned cyclic code, the first image point in consecutive rows of the input image are assigned cyclically to the blocks $\emptyset,9,2,B,4,D,6,F,8,1,A,3,C,5,E,7,\emptyset,9,$ ..... etc., this being the sequence produced by the cyclic code:

$$n_{i+1} = [n_i + 9]_{\mod 16}.$$

This assignment is shown in the first column of figure 1.

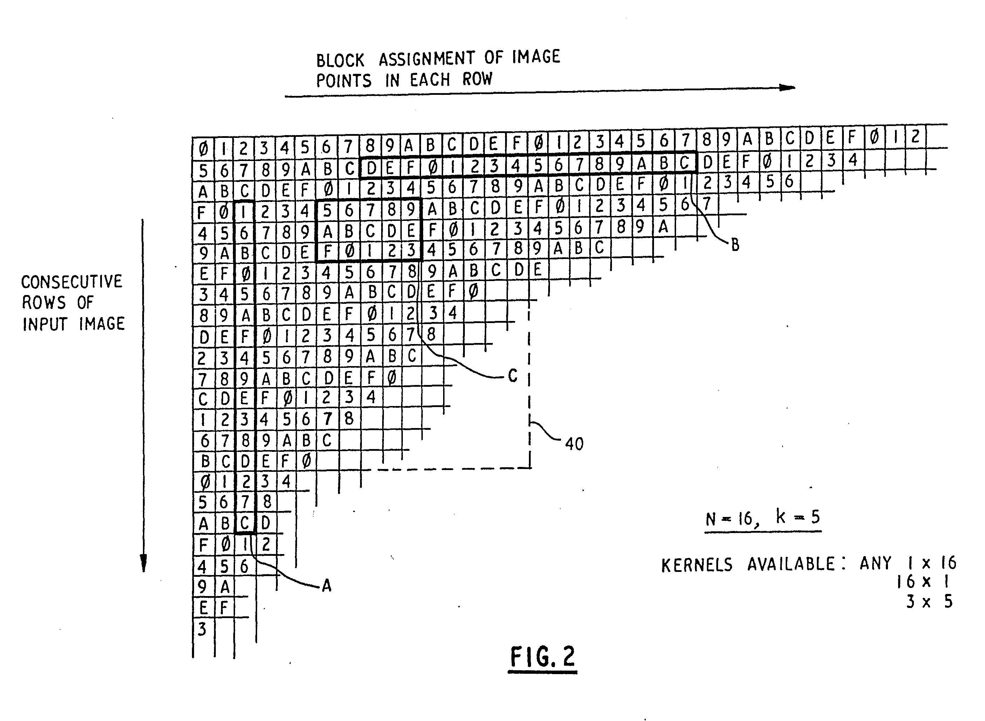

Having established the memory block assignment of the first image point of each row of the input image, the subsequent image points in each row are assigned cyclically to the memory blocks in the order $\emptyset,1,2....D,E,F,\emptyset,1,2.....$ etc., the only difference being the point in the cycle at which the storage of each row starts. Thus for each row of the input image the first sixteen image points are each stored in a different memory block at the first storage location thereof in the same row as the row of the input image from which they are derived, the second sixteen image points are each stored in the same memory blocks in the same sequence at the second storage location thereof in the same row, and so on. This storage scheme will be described later for the example of figure 2 where N=16 and $\underline{k}$=5.

The result of such storage is that, in principle, it is possible to access in parallel the image points included in any vertical 16x1 kernel of the input image (such as the kernel A), any horizontal 1x16 kernel of the input image (such as the kernel B), and any rectangular 2x7 or 7x2 kernel of the input image (such as the kernels C and D) respectively. This is because for any such kernel as above each memory block appears only once in the heavy line defining the kernel; i.e. each image point of the kernel is placed in a different one of the N memory blocks wherever the kernel may be positioned with respect to the digital input image. A 2x7 kernel is particularly appropriate for a 7x7 convolution in image enhancement techniques.

For the case where N=16 and $\underline{k}$=5, fig. 2, it is possible for the same reason to access in parallel any 16x1 kernel (such as kernel A), any 1x16 kernel (such as kernel B), and any 3x5 kernel (such as kernel C). However, 5x3 kernels cannot be obtained in this case as each 5x3 box in fig. 2 contains at least one memory block twice. However, a 3x5 kernel is a useful shape for a 3x3 or 3x5 convolution, both being popular image enhancement techniques.

Other examples, which can be demonstrated by the construction of tables similar to figs. 1 and 2, are as follows:

N=16, $\underline{k}$=7 :  One can access in parallel any 1x16, 16x1, 7x2 or 2x7 kernel.

N=16, $\underline{k}$=3 :  One can access in parallel any 1x16, 16x1 or 5x3 kernel.

N=16, $\underline{k}$=8 :  One can access in parallel any 2x8 or 1x16 kernel.

N=16, $\underline{k}$=2 :  One can access in parallel any 8x2 or 1x16 kernel.

N=16, $\underline{k}$=4 :  One can access in parallel any 4x4 or 1x16 kernel.

In general, where N and $\underline{k}$ are relatively prime, as in figs. 1 and 2 and the first two examples above, one can always access any 1xN horizontal kernel, any Nx1 vertical kernel, and any rectangular kernel of at least one fixed shape (i.e. row and column dimensions) having N-1 or slightly less image points. When N and $\underline{k}$ are not relatively prime one cannot access the Nx1 vertical kernels since the cycle period of the memory block assignment code is less than N, but one can instead obtain rectangular kernels containing precisely N image points. This is demonstrated in the last three examples above. In all cases the 1xN horizontal kernel is available from any position in the input image.

It will be seen therefore that for any given N, by a suitable choice of $\underline{k}$ one can obtain from the stored input image any desired horizontal 1 x N kernel of image points, any desired vertical N x 1 kernel of image points, or any rectangular kernel having N or less image points (when N is even) or N-1 or less image points (when N is odd). Not all such kernel types will be obtainable for every value of $\underline{k}$, but a suitable value of $\underline{k}$ can be found to permit, in addition to the horizontal 1 x N kernel which is obtainable for all values of $\underline{k}$, at least one other of the above kernel types to be obtained from any portion of the stored input image.

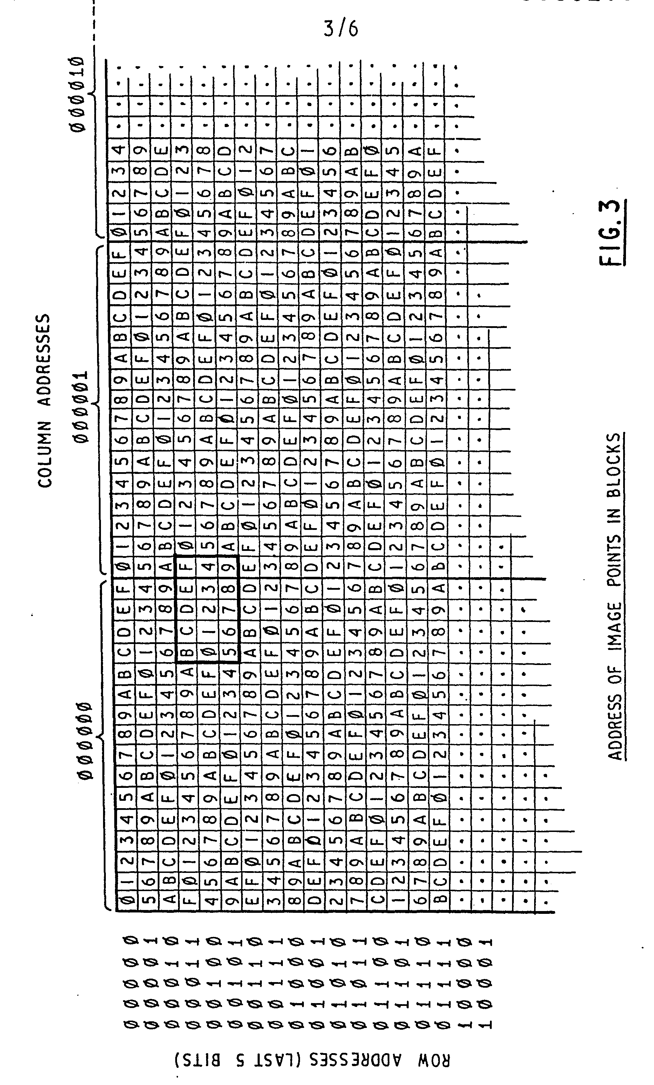

Figure 3 illustrates for N=16 and $\underline{k}$=5, figure 2, the allocation of image points to storage locations within their assigned memory blocks according to the principles discussed generally with respect to figure 1 (N=16, $\underline{k}$=9). As in figures 1 and 2, each row of boxes represents a corresponding row of the input image points with the number in each box corresponding to the assigned memory block. As described above, the first sixteen image points of each row are allocated to the first column (address ∅ ∅ ∅ ∅ ∅ ∅) of their assigned memory blocks, the second sixteen image points of each row are allocated to the second column (address ∅ ∅ ∅ ∅ ∅ 1) of their assigned memory blocks, the third sixteen image points to the third column (address ∅ ∅ ∅ ∅ 1 ∅), and so on. The row addresses of the image points in the memory blocks are shown on the left of figure 3 and correspond to the row addresses of the input image. It is to be understood that the addresses shown are based on a 1024 x 1024 input image, so that each memory block has 64 columns (6 bit column address) and 1024 rows (10 bit row address of which only the last five bits are shown in figure 3). It will be apparent that the mapping illustrated in figure 3 assumes both $\underline{c}$ and $\underline{z}$ are zero. The mapping scheme of fig. 3 is applicable to any cyclic code - all that needs to be changed are the memory block assignments, not the row and column addresses of the image points within their assigned memory blocks.

Since conventional word organised random access memory systems only permit parallel access to the same relative location of each memory block, it is necessary to modify the addressing mechanism in order to permit extraction of the desired kernel by selective modification of the read addresses supplied to the memory blocks.

In principle this latter modification is achieved by providing the actual row and column address in its assigned memory block of one predetermined (reference) image point of the desired kernel (preferably the upper left hand image point) and modifying where necessary the row and/or column addresses of the associated image points of the kernel stored in the other memory blocks by incrementing (and/or decrementing where the upper left hand image point is not used as a reference) their row and/or column addresses by integer amounts sufficient to permit parallel access to all the image points of the kernel.

Thus, referring to fig. 1, to extract kernel B one can send the row and column address of the left hand image point (which is in memory block D) to all the memory blocks D to 8 of that row, since the first twelve image points are at the same relative location (first column, second row) in their assigned memory blocks, but the addresses of the last four image points in memory blocks 9 to C must have their column address incremented by 1 since they are located in the second column of their respective memory blocks.

To extract kernel A, on the other hand, the column address to each memory block remains the same, whereas the row address must be successively incremented by 1 for each memory block in the vertical sequence shown.

Referring to fig. 2, kernel C is extracted by providing the row and column address of the top left hand side image point (in memory block 5) to all the memory blocks 5 to 9, incrementing the row address by 1 for memory blocks A to E, and incrementing the row address by 2 for memory blocks F to 3, the column address remaining unchanged for all memory blocks.

Similar considerations permit the extraction of the other kernels shown in figures 1 and 2. It is to be understood that although in the above examples only the row or column address alone needed to be modified to extract the desired kernel, in many cases both will have to be modified. For example, if kernel C of fig. 2 were located 6 columns to the right, as shown in figure 3, the memory block containing the last image point in each sequence of five points would need its column address incremented by 1 in addition to the row address incrementation described earlier.

In the preferred implementation to be described below, the required address modification is achieved by hardware circuitry including programmable look-up tables (LUT's) which permit modification both of the writing and reading sequences.

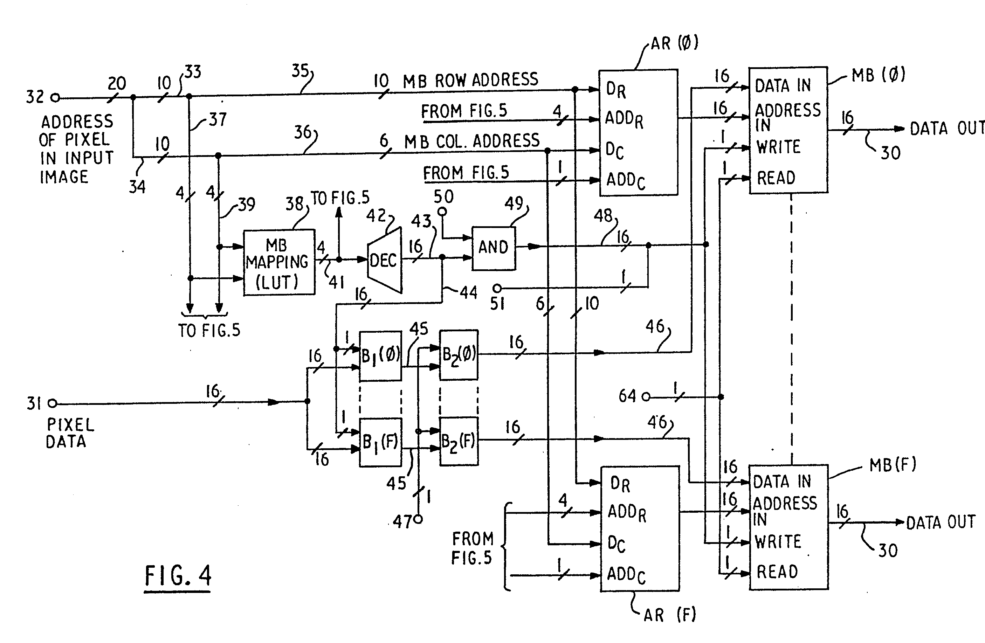

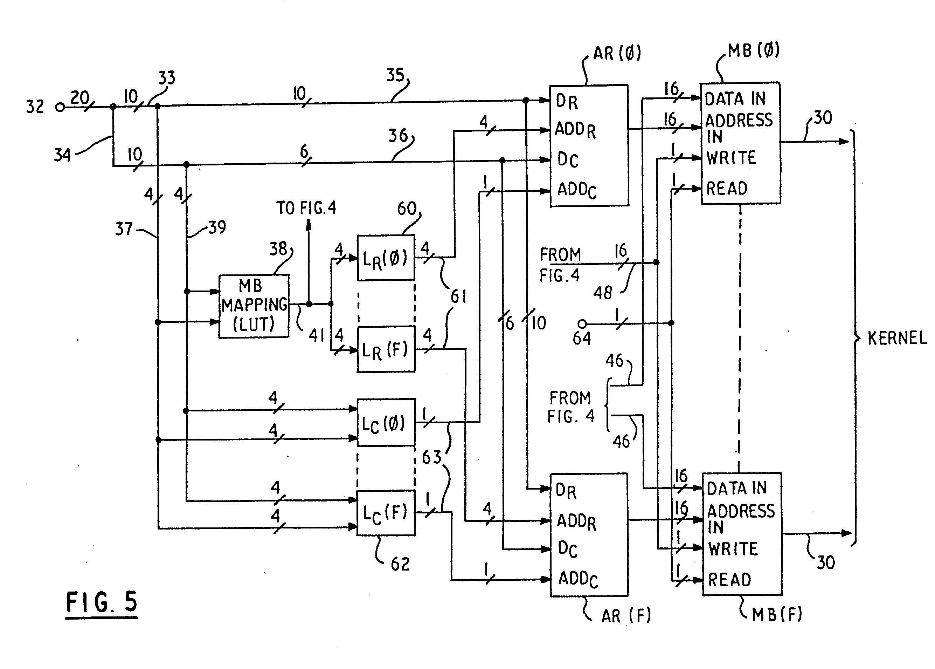

An image processing system which embodies the present invention will now be described with reference to figures 4 and 5. Figure 4 illustrates those components of the system necessary for the storage of image points (pixels) according to the principles discussed above, whereas figure 5 illustrates those components of the system necessary for kernel extraction. A system based on a 1024 x 1024 input image will be assumed, using sixteen storage modules (N=16) and sixteen-bit pixels. It is to be understood that the storage and retrieval techniques shown in figures 4 and 5 form a single system, but have been shown separately for ease of explanation and to simplify the drawings. The connections between figures 4 and 5 are marked accordingly (i.e. "from figure 5", "to figure 5", etc) and the components common to both figures have been given the same reference numerals. Finally, although single signal line connections have been shown in many places, these

- 13 -

may represent a plurality of lines in parallel as indicated by the number adjacent the diagonal slash through the lines concerned. It is to be understood that any conventional logical de-coupling means may be used to isolate the components of the system used for storage and retrieval which are not common to both functions.

Referring first to figure 4, the system comprises sixteen memory blocks MB(∅), MB(1), MB(2) ...., MB(F), using hexadecimal notation for consistency with the previous discussion, only the first and last memory blocks MB(∅) and MB(F) respectively being shown. Each memory block has an associated address register AR(∅), AR(1), AR(2) .... AR(F), again only the first and last being shown. The memory blocks MB are arranged in known fashion as a word organised random access memory wherein all the blocks are accessible in parallel, at respective locations defined by the addresses present in their associated address registers AR and applied to the ADDRESS IN inputs of the memory blocks, for simultaneous read-out from a single (16-bit) storage location of each. The data is provided in parallel on respective DATA OUT lines 30 on the application of a signal to the READ input of each memory block, each DATA OUT line 30 comprising sixteen individual bit lines as indicated.

During the initial storage of the input image points in the system, successive 16-bit pixels are applied to an input 31 whilst, in synchronism, their addresses are applied to an input 32. Thus as each pixel is applied at 31 its address in the 1024 x 1024 input image is applied at 32 as a 20-bit binary number comprising 10 bits defining the row on lines 33 and 10 bits defining the column on lines 34. The input pixels and their addresses may derive from various sources, but two general categories are possible.

(1) The pixels are derived from a source, such as an image processor or computer memory, whose data rate is compatible with the minimum cycle time of the memory blocks MB(∅) to MB(F). In other words, the duration for which each pixel and its address are present at 31 and 32 respectively is no less than the minimum cycle time of the memory blocks. In this case it is possible to store the pixels one at a time each in its assigned memory block.

(2) The pixels are derived from a source, such as a digitised TV signal, whose data rate is incompatible with the minimum cycle time of the memory blocks. In other words, the pixels are supplied at a rate which is too high for each to be stored in turn by the memory system. In this case it is necessary to store a plurality of input pixels and then transfer them simultaneously in a single memory cycle into their assigned memory blocks.

Both modes of operation are possible with the storage system of figure 4, and case (1) will be dealt with first.

As each pixel address is applied at 32, all ten row address bits are applied via lines 35 in common to the row address data input $D_R$ of the address registers AR of all the memory blocks MB. However, only the most significant six bits of the column address are applied via lines 36 to the column address data input $D_C$ of the address registers, so that the address present at the input of the address registers AR only changes every sixteen pixels. This is in accordance with the storage strategy shown in figure 3, wherein it is shown that successive groups of sixteen pixels are stored at the same relative location in their assigned memory blocks. Figure 4 also shows $ADD_R$ and $ADD_C$ inputs to the address registers AR; these are not used in the initial storage of the input image but are used for applying row and/or column correcting signals to the address registers during kernel retrieval. Thus the $ADD_R$ input permits modification of a row address in the address register and the $ADD_C$ input permits modification of the column address. The address registers AR are therefore configured also as adders. This aspect will be dealt with more fully in relation to figure 5.

The four least significant bits of the current pixel row address are applied via lines 37 to a memory block mapping look-up-table (LUT) 38, and similarly the four least significant bits of the current pixel column address are applied via lines 39 to the same LUT 38. The LUT 38 is a random access memory (RAM) having 16 rows by 16 columns of storage locations each with the capacity to store four bits. The actual contents of the LUT 38 will depend upon the value of $k$ used in the storage cyclic code, but will be the same as the upper left-hand 16 x 16 portion of the corresponding block assignment table as shown by the broken line 40 in figure 1 for $k=9$ and in figure 2 for $k=5$. The LUT 38 is preferably programmable for a desired value of $k$, but it may be a plug-in programmed read only memory (PROM) of which different replaceable versions are available for different values of $k$.

The four column address bits on lines 39 constitute the column address to the LUT 38, and the four row address bits on lines 37 constitute the row address to the LUT 38. By inspection it will be seen that the four-bit output of the LUT 38 on lines 41 defines at any instant the memory module assigned to the current pixel at input 31. The four bits defining the assigned module are decoded in a decoder 42 to provide a signal on one of sixteen lines 43 each corresponding to a respective memory block.

Simultaneously with the above memory block assignment and decoding, the input pixel data is supplied via input 31 in parallel to sixteen buffers $B_1(\emptyset)$ to $B_1(F)$. Each such buffer $B_1$ comprises a 16-bit transparent latch and has an input from a respective one of the decoder output lines 43 via lines 44. When a decoder output line 43 is active (i.e. carries a signal) only that one of the buffers $B_1(\emptyset)$ to $B_1(F)$ connected to the active line 43 will be open for receipt of the input sixteen-bit pixel, whereas all the others will be blocked, the pixel data thus latched into the selected buffer $B_1$ being simultaneously available on the output lines 45 of the buffer. For each input pixel, the particular buffer $B_1(\emptyset)$ to $B_1(F)$ which is open is determined by the decoded memory block assigned to that pixel, the buffers $B_1(\emptyset)$ to $B_1(F)$ being associated with the memory blocks $MB(\emptyset)$ to $MB(F)$ respectively.

The output lines 45 of each buffer $B_1(\emptyset)$ to $B_1(F)$ are respectively connected to the inputs of further buffers $B_2(\emptyset)$ to $B_2(F)$ also comprising 16-bit transparent latches. These further buffers $B_2$ are all held open in this first storage mode (input data rate compatible with the cycle time of the memory system) for direct transfer of the input pixel to the further buffer output lines 46. This is effected by a common enable signal continuously applied at 47 throughout the entire storage of the image. The output 46 of each further buffer $B_2$ is directly connected to the DATA IN input of a respective memory block MB. Thus the output of buffer $B_2(\emptyset)$ is connected to the DATA IN input of memory block $MB(\emptyset)$, the output of $B_2(1)$ is connected to the input of $MB(1)$, and so on until finally the output of $B_2(F)$ is connected to the input of $MB(F)$.

At this stage, therefore, a common address is present at the inputs $D_R$ and $D_C$ of all the address registers $AR(\emptyset)$ to $AR(F)$ and the output 46 of one of the buffers $B_2(\emptyset)$ to $B_2(F)$ is providing data at the DATA IN input to one of the memory blocks $MB(\emptyset)$ to $MB(F)$. The actual storage of the pixel in its assigned memory block is effected by the application of a LOAD ADDRESS signal (not shown) to the address registers AR which causes the address on the lines 35, 36 to be loaded into each register, followed by provision of a WRITE signal to the WRITE input of the memory block. The WRITE signal is provided on the appropriate one of sixteen lines 48 which are connected one-to-one to the decoder output lines 43 via an AND circuit 49, the AND circuit 49 comprising sixteen individual AND gates which are, for this first mode of storage, permanently held open by an enable signal applied at 50. Figure 4 also shows a further input 51 which permits application of a signal simultaneously to all sixteen WRITE lines 48; however this is not used in this first mode of storage and it is assumed that only one of the lines 48 is active for each input pixel. Upon application of the WRITE signal to the assigned memory block MB, the pixel present at the output of the relevant buffer $B_2(\emptyset)$ to $B_2(F)$ is stored at the location defined by the associated address register AR.

The sequence of events is therefore as follows. Each input pixel present at 31 is applied to all sixteen buffers $B_1(\emptyset)$ to $B_1(F)$. Simultaneously, the least significant four bits of both the row and column address of the current pixel are used to access the LUT 38 to determine the memory block MB to which that pixel is assigned. The decoder 42 provides a corresponding signal on one of sixteen lines 43 which both opens one of the buffers $B_1(\emptyset)$ to $B_1(F)$ and provides a WRITE signal to the assigned memory block. The pixel therefore passes through the open buffer $B_1$ and its associated further buffer $B_2$ for storage in its assigned module at the address specified in the address registers AR. It will be appreciated that all the address registers AR have the same address content, since the correction signal inputs $ADD_R$ and $ADD_C$ are not used in the storage mode, and furthermore the address only changes after each sixteen input pixels. Thus each set of sixteen consecutive pixels is stored in different memory blocks, as defined by the LUT 38, at the same relative storage location, as shown in figure 3 for $\underline{k}=5$.

Typically the minimum cycle time of the memory blocks MB is about 300 ns so for this first storage mode (case (1) above) the data source is arranged to supply the pixels at a compatible rate; i.e. each pixel and its address are present at 31 and 32 respectively for 300 ns or longer. The LUT 38 introduces a delay of only about 10 ns so that correct timing is substantially preserved at the memory blocks MB. Nevertheless, small adjustments in timing may be effected in known manner if necessary to ensure that the pixel data, memory block address, LOAD ADDRESS and WRITE signals arrive in proper sequence at the memory system for each pixel.

For the second mode of storage, case (2) above, the enable signal is removed from 50 so that AND circuit 49 is blocked throughout the storage of the entire input image. Furthermore, the signal at 47 is not continuous but is intermittently applied after every sixteen pixels. Finally, a WRITE signal is applied to input 51 also after every sixteen pixels. The operation is as follows.

Although, as before, each input pixel at 31 is transferred in turn into the appropriate buffer $B_1(\emptyset)$ to $B_1(F)$ as selected by the LUT 38, by virtue of the absence of a signal on 47 the inputs of the associated buffers $B_2(\emptyset)$ to $B_2(F)$ are all closed and therefore these input pixels do not appear on the output lines 46. However, at the end of each sixteen input pixels the entire contents of the buffers $B_1(\emptyset)$ to $B_1(F)$ are transferred to the further buffers $B_2(\emptyset)$ to $B_2(F)$ by an enable signal which is momentarily applied to the input 47. The signal is then removed from 47, again isolating the two sets of buffers $B_1$ and $B_2$ so that the next sixteen input pixels can be written into the first buffers $B_1$ while preserving the previous information in the second buffers $B_2$. This latter information is therefore available for a period of up to sixteen pixels for writing into the memory blocks MB. This is achieved in one memory cycle by providing a signal on input 51 which activates the WRITE inputs of all the memory blocks simultaneously so that all sixteen pixels stored in the buffers $B_2(\emptyset)$ to $B_2(F)$ are written simultaneously into their assigned memory blocks. It is to be observed that in this second mode the common address present at the input to the address registers $AR(\emptyset)$ to $AR(F)$ during each set of sixteen consecutive pixels must be maintained during the subsequent memory block storage cycle since the next set of sixteen pixels will cause a new address to be provided at the input of the storage registers AR. This is effected by the LOAD ADDRESS signal (not shown) which in known manner transfers the address on lines 35, 36 into each address register AR at an appropriate point near the end of each sixteen pixel storage cycle in the buffers $B_1(\emptyset)$ to $B_1(F)$.

- 19 -

Having thus stored an entire 1024 x 1024 pixel input image, attention is now directed to figure 5 for a description of those components of the system used for kernel extraction. As mentioned previously, many of these components are common to those of figure 4, and have therefore been similarly referenced.

The additional components necessary for kernel extraction are primarily look-up-tables 60 and 62 for row and column address correction respectively. The LUT 60 comprises sixteen functionally independent 4 x 4 LUTs $L_R(\emptyset)$ to $L_R(F)$, each of the sixteen storage locations of each LUT $L_R$ having a capacity of 4 bits, and the LUT 62 comprises sixteen functionally independent 16 x 16 LUTs $L_C(\emptyset)$ to $L_C(F)$, each of the 256 storage locations of each LUT $L_C$ having a capacity of 1 bit. As will be described, the contents of the LUTs 60 and 62 are determined both by the particular kernel shape which it is desired to extract and by the original mapping performed by the LUT 38. Thus the LUTs 60 and 62 are, like the LUT 38, programmable RAMs or plug-in PROMs.

In order to extract a kernel of the chosen shape from any position in the input image, the row and column address in the original input image of a reference pixel at a predetermined location in the kernel is placed on the lines 33 and 34 via the input 32; in particular in this embodiment the pixel nearest the top left-hand corner of the relevant memory block assignment table (figs. 1 and 2) is used as the reference pixel. The address of this reference pixel is thus present in common at the address data inputs $D_R$ and $D_C$ of all the address registers AR($\emptyset$) to AR(F), and serves as an initial reference which must be modified for at least some of the memory blocks other than that containing the reference pixel itself, except in the particular case where the kernel is a 1 x 16 horizontal strip which does not cross a memory block column address boundary (heavy vertical lines in figure 3).

The vertical (row) address correction is effected by the LUTs $L_R(\emptyset)$ to $L_R(F)$ which are addressed in common by the 4-bit output of the LUT 38, it being appreciated that such output defines the memory block MB assigned to the reference pixel. The 4-bit output of the LUT 38 can take any one of sixteen different values, depending upon the memory block assigned to the reference pixel, and thus accesses a respective one of the sixteen 4-bit storage locations in each LUT $L_R(\emptyset)$ to $L_R(F)$. The information contained in the storage locations thus accessed, one such location only in each of the LUTs $L_R(\emptyset)$ to $L_R(F)$, defines the necessary corrections to the row addresses of the memory blocks other than that containing the reference pixel, the 4-bit output of each LUT $L_R(\emptyset)$ to $L_R(F)$ being applied via respective output lines 61 to the $ADD_R$ input of the respective address register $AR(\emptyset)$ to $AR(F)$ for addition to the reference row address present at $D_R$.

It will be apparent that in general a different set of sixteen 4-bit vertical address correction signals will need to be supplied by the LUTs $L_R(\emptyset)$ to $L_R(F)$ to the address registers $AR(\emptyset)$ to $AR(F)$ respectively depending upon which of the sixteen memory blocks was assigned to the reference pixel, i.e. upon that storage location in each of the LUTs $L_R(\emptyset)$ to $L_R(F)$ which is accessed by the output of the LUT 38.

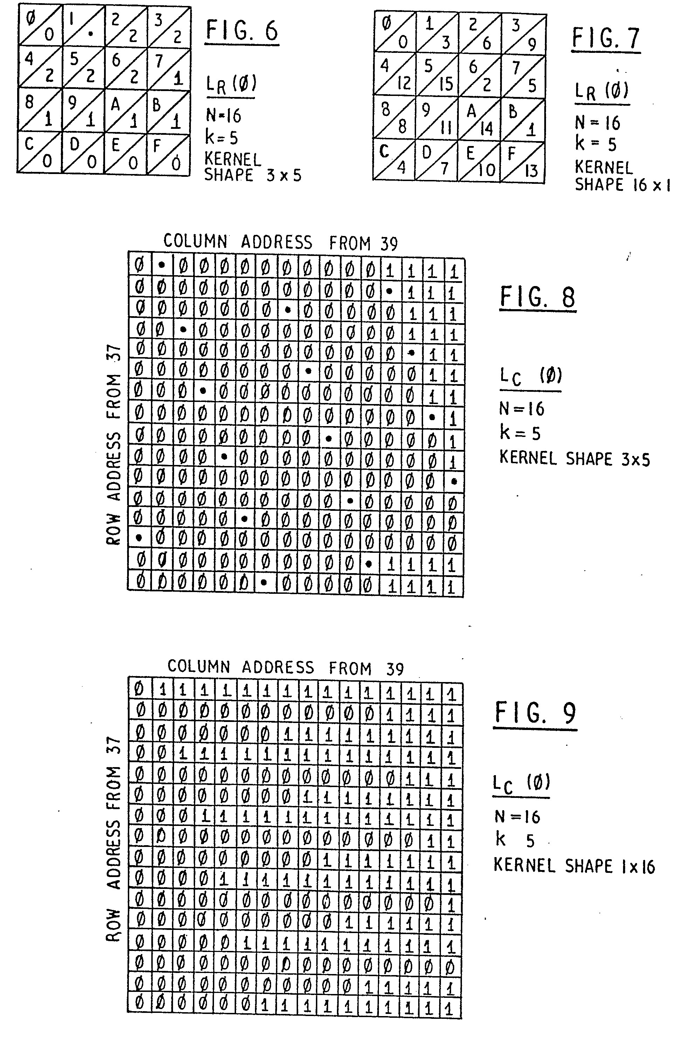

As mentioned previously, the contents of the LUTs $L_R(\emptyset)$ to $L_R(F)$ are determined both by the initial mapping provided by LUT 38 and by the desired kernel shape, and as examples figure 6 illustrates the contents of the LUT $L_R(\emptyset)$ for N=16, $\underline{k}$=5 and a rectangular 3 x 5 kernel shape, while figure 7 illustrates the contents of the LUT $L_R(\emptyset)$ for N=16, $\underline{k}$=5 and a vertical 16 x 1 kernel shape. The 4 by 4 array of boxes in each figure represents the sixteen storage location of the LUT $L_R(\emptyset)$. Each such box is divided diagonally and the hexadecimal number at the top left of each box represents the address of that location in terms of the reference pixel memory block defined by the 4-bit output 41 of the LUT 38, whereas the decimal number at the bottom right of each box shows the necessary row address correction as defined by the 4-bit binary number stored at that location. Similar diagrams can be constructed for all the LUTs $L_R(\emptyset)$ to $L_R(F)$ for any original mapping by LUT 38 and any permissible kernel shape. The blank space at the bottom right of the second location of the first row in figure 6 indicates that no correction is necessary as, if the reference pixel is located in memory block MB(1), no pixels of the 3 x 5 kernel fall in memory block MB($\emptyset$). This can be seen by inspection of figure 2. The spurious output of memory block MB($\emptyset$) in this case may be suppressed by hardware or software means not shown.

The horizontal (column) address correction is effected by the LUTs $L_C(\emptyset)$ to $L_C(F)$. Since no kernel can extend across more than one memory block column address boundary (heavy vertical lines in figure 3), the column address correction for any memory block is at most 1. Each storage location of the LUTs $L_C(\emptyset)$ to $L_C(F)$ therefore contains a 1 or a $\emptyset$. However, these latter LUTs must be larger than the LUTs $L_R(\emptyset)$ to $L_R(F)$ since in order to determine whether a column address correction is needed it is necessary to know the position of the reference pixel in the input image in order to determine whether the kernel crosses a memory block column address boundary. The LUTs $L_C(\emptyset)$ to $L_C(F)$ are therefore 16 x 16 tables providing 256 storage locations each capable of storing one bit. The LUTs $L_C(\emptyset)$ to $L_C(F)$ are addressed in common by the least significant four bits of both the row and column addresses of the reference pixel, in precisely the same way as the LUT 38, for access to a single location of each. The output of each LUT $L_C(\emptyset)$ to $L_C(F)$ is applied via respective output lines 63 to the $ADD_C$ input of the respective address register AR($\emptyset$) to AR(F) for addition to the reference column address present at $D_C$.

It will be appreciated that a different set of storage locations, one in each LUT $L_C(\emptyset)$ to $L_C(F)$, are accessed for each different address defined by the data on lines 37 and 39, and the set of $\emptyset$'s and/or 1's thus produced are pre-programmed according to the value of k and the desired kernel shape to provide the proper correction to the reference column addresses at the address registers AR.

- 22 -

As examples, figure 8 shows the contents of the LUT $L_C(\emptyset)$ for N=16, $\underline{k}$=5 and a rectangular 3 x 5 kernel shape, and figure 9 shows the contents of the LUT $L_C(\emptyset)$ for N=16, $\underline{k}$=5 and a horizontal 1 x 16 kernel shape. Again, corresponding tables can be constructed for the other LUTs $L_C(1)$ to $L_C(F)$ for any $\underline{k}$ and any permissible kernel shape. As in the case of figures 6 and 7, a blank box indicates a "don't care" situation since the output from the relevant memory block is not used.

Having thus correctly modified the vertical and horizontal addresses at the inputs to the address registers AR the modified addresses are loaded into the registers AR by the LOAD ADDRESS signal. This is followed by a READ signal applied at 64 in common to all the memory blocks MB whereupon the pixels of the desired kernel appear in parallel on the outputs 30.

Each kernel so extracted may be subjected to any of the image processing techniques conventionally employed. The result of such processing may be a single image point which is written back into the memory to replace a pre-determined one of the image points of the original kernel, and for this purpose the circuitry of figure 4 may be used.

On the other hand the result of the processing may be a kernel of new image points of the same shape as the original kernel, and in this case all the elements of the kernel may be written in parallel into their original locations in the memory using the circuitry of figure 5. For this purpose the image points of the processed kernel are placed on the appropriate DATA IN lines 46 and written in parallel into the memory blocks by application of a common WRITE signal to lines 48, the correction signals provided by the LUTs 60 and 62 remaining the same as when the unprocessed kernel was extracted.

It is to be understood that while the above has described a system in which the first image point in each row of the digital input image is located in the same relative column of its assigned memory block as the first image point of all the other rows in their assigned memory blocks, and in which consecutive rows of the input image are stored in consecutive rows of the memory block, these conditions are not strictly essential for operation of the invention. However, given the starting memory block for the first image point of each row, the simple ordering described above permits relatively simple addressing for storing the input image and extracting the desired kernels; a more random (less ordered) distribution would require more complex addressing but could be achieved in principle by use of the appropriate contents in the various look-up-tables.

All that is strictly necessary is that the starting memory block assigned to the first image point of each row be as defined in the above equation for $n_1$, and that the subsequent image points of each row are allocated cyclically to the memory blocks on the basis of a cycle which has a period N, i.e. it includes each memory block only once.

CLAIMS

1.   An image processing system comprising:

a word organised random access memory for storing a digital input image having X rows by Y columns of image points, the memory comprising N memory blocks each having XY/N image point storage locations;

storage means for storing the digital input image in the memory in such manner that for spatially consecutive rows of the input image the first image point in each row i ($\emptyset \leq$ i $\leq$ X-1) is stored in a memory block $n_i$ ($\emptyset \leq n_i \leq$ N-1) according to the following cyclic code:

$$n_{i+1} \quad = \quad [n_i + k]_{\text{mod N}}$$

where:   $n_i$ is the memory block assigned to the first image point in row i,

k is an integer $\emptyset$ < k < N, and

$n_\emptyset$ (corresponding to row i=$\emptyset$) may be $\emptyset$ or any arbitrary integer $\leq$ N-1,

the subsequent image points in each row i of the input image being stored cyclically in the memory blocks on the basis of a common cycle which has a period N;   and

retrieval means for retrieving in parallel from any position of the stored input image a kernel of image points of at least one fixed shape whose image points are contained in different memory blocks, the retrieval means comprising means responsive to the address in the input image of one reference image point of the kernel for providing the address of the reference image point in its assigned memory block, and means for modifying where necessary the last mentioned address for supply to those memory blocks containing image points of the kernel other than the reference image point.

2. An image processing system as claimed in claim 1, wherein the storage means comprises a first look-up-table defining the memory block assigned to each image point in response to the address of the image point in the input image.

3. An image processing system as claimed in claim 2, wherein the contents of the first look-up-table may be changed by programming or replacement for different values of $k$.

4. An image processing system as claimed in any preceding claim, wherein the address modification means comprises further look-up-tables responsive to the address of the reference image point in the input image.

5. An image processing system as claimed in claim 4, wherein the contents of the further look-up-tables may be changed by programming or replacement for different kernel shapes.

BLOCK ASSIGNMENT OF IMAGE
POINTS IN EACH ROW

CONSECUTIVE
ROWS OF
INPUT IMAGE

$N = 16, \quad k = 9$

KERNELS AVAILABLE: ANY $1 \times 16$
$16 \times 1$
$7 \times 2$
$2 \times 7$

FIG. 1

0085210

BLOCK ASSIGNMENT OF IMAGE
POINTS IN EACH ROW ──────────►

| | | | | | | | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|---|---|---|---|---|---|
| Ø | 1 | 2 | 3 | 4 | 5 | 6 | 7 | 8 | 9 | A | B | C | D | E | F | Ø | 1 | 2 | 3 | 4 | 5 | 6 | 7 | 8 | 9 | A | B | C | D | E | F | Ø | 1 | 2 |
| 5 | 6 | 7 | 8 | 9 | A | B | C | D | E | F | Ø | 1 | 2 | 3 | 4 | 5 | 6 | 7 | 8 | 9 | A | B | C | D | E | F | Ø | 1 | 2 | 3 | 4 |
| A | B | C | D | E | F | Ø | 1 | 2 | 3 | 4 | 5 | 6 | 7 | 8 | 9 | A | B | C | D | E | F | Ø | 1 | 2 | 3 | 4 | 5 | 6 |
| F | Ø | 1 | 2 | 3 | 4 | 5 | 6 | 7 | 8 | 9 | A | B | C | D | E | F | Ø | 1 | 2 | 3 | 4 | 5 | 6 | 7 |
| 4 | 5 | 6 | 7 | 8 | 9 | A | B | C | D | E | F | Ø | 1 | 2 | 3 | 4 | 5 | 6 | 7 | 8 | 9 | A |
| 9 | A | B | C | D | E | F | Ø | 1 | 2 | 3 | 4 | 5 | 6 | 7 | 8 | 9 | A | B | C |
| E | F | Ø | 1 | 2 | 3 | 4 | 5 | 6 | 7 | 8 | 9 | A | B | C | D | E |
| 3 | 4 | 5 | 6 | 7 | 8 | 9 | A | B | C | D | E | F | Ø |
| 8 | 9 | A | B | C | D | E | F | Ø | 1 | 2 | 3 | 4 |
| D | E | F | Ø | 1 | 2 | 3 | 4 | 5 | 6 | 7 | 8 |
| 2 | 3 | 4 | 5 | 6 | 7 | 8 | 9 | A | B | C |
| 7 | 8 | 9 | A | B | C | D | E | F | Ø |
| C | D | E | F | Ø | 1 | 2 | 3 | 4 |
| 1 | 2 | 3 | 4 | 5 | 6 | 7 | 8 |
| 6 | 7 | 8 | 9 | A | B | C |
| B | C | D | E | F | Ø |
| Ø | 1 | 2 | 3 | 4 |
| 5 | 6 | 7 | 8 |
| A | B | C | D |
| F | Ø | 1 | 2 |
| 4 | 5 | 6 |
| 9 | A |
| E | F |
| 3 |

A

B

C

40

$N = 16, \quad k = 5$

KERNELS AVAILABLE: ANY 1 × 16
16 × 1
3 × 5

CONSECUTIVE
ROWS OF
INPUT IMAGE

**FIG. 2**

0085210

COLUMN ADDRESSES

ROW ADDRESSES (LAST 5 BITS)

| 0 0 0 0 0 0 | 0 0 0 0 0 1 | 0 0 0 0 1 0 |

| Row | 0 1 2 3 4 5 6 7 8 9 A B C D E F | 0 1 2 3 4 5 6 7 8 9 A B C D E F | 0 1 2 3 4 · · · · |
|---|---|---|---|
| 0 0 0 0 0 | 0 1 2 3 4 5 6 7 8 9 A B C D E F | 0 1 2 3 4 5 6 7 8 9 A B C D E F | 0 1 2 3 4 · · · · |
| 0 0 0 0 1 | 5 6 7 8 9 A B C D E F 0 1 2 3 4 | 5 6 7 8 9 A B C D E F 0 1 2 3 4 | 5 6 7 8 9 · · · · |
| 0 0 0 1 0 | A B C D E F 0 1 2 3 4 5 6 7 8 9 | A B C D E F 0 1 2 3 4 5 6 7 8 9 | A B C D E · · · · |
| 0 0 0 1 1 | F 0 1 2 3 4 5 6 7 8 9 A B C D E | F 0 1 2 3 4 5 6 7 8 9 A B C D E | F 0 1 2 3 · · · · |
| 0 0 1 0 0 | 4 5 6 7 8 9 A B C D E F 0 1 2 3 | 4 5 6 7 8 9 A B C D E F 0 1 2 3 | 4 5 6 7 8 · · · · |
| 0 0 1 0 1 | 9 A B C D E F 0 1 2 3 4 5 6 7 8 9 | A B C D E F 0 1 2 3 4 5 6 7 8 9 | A B C D · · · · |
| 0 0 1 1 0 | E F 0 1 2 3 4 5 6 7 8 9 A B C D | E F 0 1 2 3 4 5 6 7 8 9 A B C D | E F 0 1 2 · · · · |
| 0 0 1 1 1 | 3 4 5 6 7 8 9 A B C D E F 0 1 2 | 3 4 5 6 7 8 9 A B C D E F 0 1 2 | 3 4 5 6 7 · · · · |
| 0 1 0 0 0 | 8 9 A B C D E F 0 1 2 3 4 5 6 7 | 8 9 A B C D E F 0 1 2 3 4 5 6 7 | 8 9 A B C · · · · |
| 0 1 0 0 1 | D E F 0 1 2 3 4 5 6 7 8 9 A B C | D E F 0 1 2 3 4 5 6 7 8 9 A B C | D E F 0 1 · · · · |
| 0 1 0 1 0 | 2 3 4 5 6 7 8 9 A B C D E F 0 1 | 2 3 4 5 6 7 8 9 A B C D E F 0 1 | 2 3 4 5 6 · · · · |
| 0 1 0 1 1 | 7 8 9 A B C D E F 0 1 2 3 4 5 6 | 7 8 9 A B C D E F 0 1 2 3 4 5 6 | 7 8 9 A B · · · · |
| 0 1 1 0 0 | C D E F 0 1 2 3 4 5 6 7 8 9 A B | C D E F 0 1 2 3 4 5 6 7 8 9 A B | C D E F 0 · · · · |
| 0 1 1 0 1 | 1 2 3 4 5 6 7 8 9 A B C D E F 0 | 1 2 3 4 5 6 7 8 9 A B C D E F 0 | 1 2 3 4 5 · · · · |
| 0 1 1 1 0 | 6 7 8 9 A B C D E F 0 1 2 3 4 5 | 6 7 8 9 A B C D E F 0 1 2 3 4 5 | 6 7 8 9 A · · · · |
| 0 1 1 1 1 | B C D E F 0 1 2 3 4 5 6 7 8 9 A | B C D E F 0 1 2 3 4 5 6 7 8 9 A | B C D E F · · · · |
| 1 0 0 0 0 | · · · · · · · · · · · · · · · · | · · · · · · · · · · · · · · · · | · · · · · · · · |
| 1 0 0 0 1 | · · · · · · · · · · · · · · · · | · · · · · · · · · · · · · · · · | · · · · · · · · |

ADDRESS OF IMAGE POINTS IN BLOCKS

FIG. 3

0085210

FIG. 4

FIG. 5

5/6

0085210

0085210

6/6

FIG. 6

$L_R (\emptyset)$

N=16
k=5
KERNEL
SHAPE 3×5

FIG. 7

$L_R (\emptyset)$

N = 16
k = 5
KERNEL
SHAPE 16 × 1

COLUMN ADDRESS FROM 39

ROW ADDRESS FROM 37

FIG. 8

$L_C (\emptyset)$

N = 16
k = 5
KERNEL SHAPE 3×5

COLUMN ADDRESS FROM 39

ROW ADDRESS FROM 37

FIG. 9

$L_C (\emptyset)$

N = 16
k  5
KERNEL SHAPE 1×16

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-3 938 102 (IBM) *From column 5, line 35 to column 6, line 27; figure 2A* | 1 | G 06 F 15/20 G 06 F 13/00 |

TECHNICAL FIELDS SEARCHED (Int. Cl. ³)

G 06 F 15/20
G 06 F 13/00

The present search report has been drawn up for all claims

| Place of search THE HAGUE | Date of completion of the search 16-09-1982 | Examiner BURGAUD C. |
|---|---|---|